# EUROPEAN PATENT APPLICATION

(11) **EP 4 628 820 A1**
(43) Date of publication of application: **08.10.2025**
(21) Application number: 23898015.5
(22) Date of filing: 14.09.2023
(51) Int. Cl.: F25D 23/02, E05F 5/02, E05F 5/10, F16F 9/16

(54) **DAMPER ASSEMBLY AND REFRIGERATOR COMPRISING SAME**

(30) Priority: 01.12.2022 KR 20220166105
(71) Applicant: LG Electronics Inc., Yeongdeungpo-gu Seoul 07336 (KR); Samheung Precision Co.,Ltd., Incheon 21631 (KR)
(72) Inventor: LEE, Hee Jun, Seoul 08592 (KR); CHANG, Jin Ho, Seoul 08592 (KR); SHIN, Jaehoon, Seoul 08592 (KR); SHIN, Jae Un, Seoul 08592 (KR); O, Il-Soo, Incheon 21631 (KR)
(74) Representative: Vossius & Partner Patentanwälte Rechtsanwälte mbB
(86) International application number: PCT/KR2023/013781
(87) International publication number: WO 2024/117481

(57) **Abstract**

According to the present invention, a damper cover and a damper case surrounding a damper to protect same can reduce damage to the damper caused by direct application, to the damper, of a lateral force generated by a structure that rotates, and the mutual coupling relationship of the damper cover and damper case can assist in the back-and-forth reciprocating movement of the damper.

## Description

### Technical Field

The present invention relates to a damper assembly and a refrigerator including the same, and more particularly, to a damper assembly providing a damping force to a structure performing a rotational motion, and a refrigerator including the same.

### Background Art

A refrigerator is a home appliance that supplies cold air generated by utilizing the circulation of refrigerant to a storage chamber, thereby keeping various types of storage objects in the storage chamber fresh for a long period of time.

A user can open and close a storage chamber formed within a cabinet of the refrigerator with the use of a door.

As an example, the door may be implemented in various ways, such as in a rotary door that rotates around one side of the refrigerator as a rotation axis or in a drawer-type door that slides in and out in the forward and backward directions.

The refrigerator may be equipped with a damper that provides damping force to the door to reduce the noise and absorb the impact generated when opening and closing the door.

Specifically, the damper can adjust the closing speed of the door by providing damping force to the door during the closing process after the door is opened, thereby allowing the door to be closed smoothly.

For example, the damper can provide damping force by utilizing the resisting force by friction generated when a charged material, such as oil or gas, filled inside of the damper passes through an orifice.

Movement of the charged material within the damper can be accomplished by the linear reciprocating sliding motion of a piston rod along a cylinder within the damper, the piston rod having a piston mounted on one side thereof.

In general, the piston rod has a narrow diameter compared to the diameter of the cylinder and is formed in a long shape in one direction, and during the linear reciprocating sliding motion, a portion thereof may protrude outside the cylinder.

In the case where a damper that performs a linear reciprocating motion is mounted on a structure that performs a rotational motion or is mounted so as to collide with a structure that performs a rotational motion, a lateral force generated by the rotational motion of the structure may be applied to the damper.

In this case, since the piston rod, which is extended to protrude outwards from the cylinder, has a relatively narrow diameter, it may be bent or broken by the lateral force.

If the piston rod becomes bent or broken as described above, there may occur a problem of the damper losing its function.

Meanwhile, on one side of the door a pillar may be installed to prevent the cold air leakage from the storage chamber.

The pillar can be rotated to be folded when the door is opened and be unfolded again when the door is closed.

Since the pillar also acts as a resistance when the door is closed, additional force may be required to rotate the pillar when closing the door.

Additionally, in the case of the damper, when the door is closed, additional force may be required to compress the damper.

Therefore, when the damper is also operated on the door equipped with the pillar, there may occur a problematic situation in which the door does not close properly due to the damping force of the damper added to the resisting force of the pillar.

To solve this problem of the door not closing properly, the damping force of the damper must be reduced or the force applied by the user to close the door must be increased.

However, if the damping force of the damper decreases, the damper's effect becomes minimal, which may cause a problem of the door not closing smoothly.

And in the case where the force applied by the user to close the door is increased while maintaining the damping force of the damper unchanged, the force required to open the door also is increased, which may problematically lead to the user dissatisfaction.

### Detailed Description of the Invention

### Technical Problem

A purpose of the present invention is to provide a damper assembly capable of reducing damage which may occur when a lateral force is applied to a damper performing a linear reciprocating sliding motion, and a refrigerator including the same.

It is also a purpose of the present invention to provide a damper assembly capable of reducing the damping force of the damper before the pillar operates, and a refrigerator including the same.

It is also a purpose of the present invention to provide a damper assembly capable of reducing damage to a ring included in the damper and performing a reciprocating sliding motion repetitively through an inner diameter change section of the damper, and a refrigerator including the same.

The purposes of the present invention are not limited to the purposes mentioned above, and other purposes and advantages of the present invention which are not mentioned can be appreciated from the following description, and will be more clearly appreciated by the embodiments of the present invention. Furthermore, it is readily understood that the objects and advantages of the present invention can be achieved by the means set forth in the claims and combinations thereof.

### Technical Solution

According to an embodiment of the present invention for accomplishing the above-described purposes, a damper assembly and a refrigerator have a technical feature in that a damper is configured to reciprocate in the forward and backward directions along the inner circumferential surface of a damper case.

Specifically, in order to reduce the damage to the damper which would otherwise occur when the lateral force is applied to the damper, the damper cover and the damper case which surround the damper to protect the damper can guide the reciprocating sliding motion of the damper in the forward and backward directions through an engaging structure and interaction of them.

The damper assembly and the refrigerator includes a damper, a damper cover surrounding a front end of the damper and at least a portion of an outer circumferential surface of the damper, and a damper case surrounding a rear end of the damper and at least a portion of the outer circumferential surface of the damper.

In this case, the damper cover is capable of performing a reciprocating sliding motion in forward and backward directions along an inner circumferential surface of the damper case.

Additionally, in another embodiment of the present invention, a movement of the damper cover may be dependent on a movement of the damper.

Additionally, in another embodiment of the present invention, the damper cover may be inserted into the damper case and reciprocates therein.

Additionally, in another embodiment of the present invention, the damper cover may include a pair of rails extending in the forward and backward directions, the damper case may include guide portions on an inner surface of the damper case, which guide movement of the rails, and the rails may be configured to reciprocate along the guide portions.

Additionally, in another embodiment of the present invention, the damper case may include a pair of slits on side surfaces of the damper case, each slit being open and extending along the rail so as to overlap with a portion of the rail, and the rail may include a catch that reciprocate along the slit.

Additionally, in another embodiment of the present invention, the damper may be compressed or extended, the catch engaging the slit as the damper cover may move to limit the damper's maximum extension. Additionally, in another embodiment of the present invention, the damper cover may include a pair of first guide ribs protruding from an outer surface of the damper cover along the forward and backward directions.

Additionally, in another embodiment of the present invention, the damper case may include a plurality of second guide ribs on an inner surface of the damper case, which extend in the forward and backward directions and protrude, the damper cover may include a plurality of insertion portions as openings on an outer surface of the damper cover, and the insertion portion may be configured to reciprocates along the second guide rib.

Additionally, in another embodiment of the present invention, the damper case may include one or more fastening parts protruding from an outer circumferential surface of the damper case.

Additionally, in another embodiment of the present invention, the damper may include a housing, a piston positioned within the housing, and a rod fixed to the piston at one end and extending to protrude from the rear end of the housing at the other end, the damper case may support the rod, the damper cover may support a front end of the housing.

Additionally, in another embodiment of the present invention, a reinforcing plate may be disposed between the damper case and the rod.

Additionally, in another embodiment of the present invention, the reinforcing plate may include a recessed groove for receiving and fixing the rod end.

Additionally, in another embodiment of the present invention, the damper may include a first inner diameter section, a second inner diameter section, and an inner diameter change section positioned between the first inner diameter section and the second inner diameter section, and an inner diameter of the housing in the second inner diameter section may be greater than an inner diameter of the housing in the first inner diameter section.

Additionally, in another embodiment of the present invention, the damper may include a housing filled with oil, a piston including an oil flow path and reciprocate along the inner diameter of the housing, a bracket disposed to be spaced apart from the piston by a predetermined distance and reciprocating along the inner diameter of the housing, and a ring disposed between the piston and the bracket.

Additionally, in another embodiment of the present invention, the ring may be formed of a Teflon material.

Additionally, in another embodiment of the present invention, the damper may further include one or more sealers sealing the housing to prevent the oil from leaking, a friction coefficient of the ring may be lower than a friction coefficient of the sealer, and an elastic modulus of the ring may be higher than an elastic modulus of the sealer.

Additionally, in another embodiment of the present invention, the piston may include a first piston portion and a second piston portion protruding from the first piston portion toward the bracket and having an outer diameter smaller than an outer diameter of the first piston portion, an inner diameter of the ring may be greater than the outer diameter of the second piston portion, and the ring may surround a periphery of the second piston portion while being spaced apart from an outer circumferential surface of the second piston portion by a predetermined distance.

Additionally, in another embodiment of the present invention, when the piston is compressed, the ring may move along the second piston portion toward the first piston portion until one side contacts the first piston portion; and when the piston returns, the ring may move along the second piston portion toward the bracket until the other side contacts the bracket.

Additionally, in another embodiment of the present invention, when the piston is compressed and the ring passes through the first inner diameter section, the oil filled in a front side of the piston may flow toward a rear side of the piston through a first flow path formed with the oil flow path.

Additionally, in another embodiment of the present invention, when the piston is compressed and the ring passes through the second inner diameter section, the oil filled in a front side of the piston may flow toward a rear side of the piston through a second flow path formed between an outer diameter of the ring and the inner diameter of the housing and between an outer diameter of the first piston portion and the inner diameter of the housing.

Additionally, in another embodiment of the present invention, when the piston is returned and the ring passes through the second inner diameter section, the oil filled in a rear side of the piston may flow toward a front side of the piston through a second flow path formed between an outer diameter of the ring and the inner diameter of the housing and between an outer diameter of the first piston portion and the inner diameter of the housing and through a third flow path formed between an outer diameter of the second piston portion and an inner diameter of the ring.

Additionally, in another embodiment of the present invention, when the piston is returned and the ring passes through the first inner diameter section, the oil filled in a rear side of the piston may flow toward a front side of the piston through a third flow path formed between an outer diameter of the second piston portion and an inner diameter of the ring.

Further, a refrigerator according to an embodiment of the present invention for accomplishing the above-described purposes has a technical feature in that a damper assembly providing a damping force is mounted on each of a pair of doors that rotate to open and close the front side of the cabinet.

Specifically, in order to reduce the damage to the damper which would otherwise occur when the lateral force is applied to the damper, the damper cover and the damper case which surround the damper to protect the damper can guide the reciprocating sliding motion of the damper in the forward and backward directions through an interaction of them.

The refrigerator includes a cabinet including a storage chamber, a pair of doors, each rotating to open and close a front side of the cabinet, and a pair of damper assemblies mounted on the pair of doors, respectively, to provide damping force.

Additionally, in another embodiment of the present invention, the pair of damper assemblies may be mounted on rear surfaces of the pair of doors, respectively to be disposed diagonally toward sides of the cabinet.

Additionally, in another embodiment of the present invention, the pair of doors may include a first door and a second door, and a pillar rotatably mounted to fold toward or unfold from one side of the first door.

Additionally, in another embodiment of the present invention, the damper may include a first damping force section, a second damping force section, and a damping force change section disposed between the first damping force section and the second damping force section, and a first damping force provided by the damper in the first damping force section may be greater than a second damping force provided by the damper in the second damping force section.

Additionally, in another embodiment of the present invention, when the first door is closed from an open state thereof,
firstly the first damping force is provided to the first door, and secondarily, the second damping force and a third damping force generated by a rotation of the pillar may be provided to the first door.

### Advantageous Effects of the Invention

According to the present invention, the damper cover and the damper case, which surround the damper to protect the damper, can reduce damage to the damper caused by the lateral force directly applied to the damper by the structure performing the rotational motion, and besides, the damper cover and the damper case can assist the reciprocating sliding motion of the damper in the forward and backward directions through the mutual fastening relationship.

Besides, according to the present invention, by using a damper including the inner diameter change section in which the inner diameter changes so as to provide different damping forces, at the time when the door is closed, the damper can provide a first damping force to the door, and then the damper can be changed to provide a second damping force smaller than the first damping force before the pillar is operated.

Thereby, even though the resisting force of the pillar and the damping force of the damper are applied to the door, the user can close the door properly without applying great force, and the door can be guided to be closed smoothly.

Further, according to the present invention, since the ring included in the damper and performing the reciprocating sliding motion together with the piston includes a Teflon material having low friction and high strength, it is possible to reduce the damage to the ring which would otherwise occur when the ring is repeatedly moved through the inner diameter change section within the damper, thereby increasing the reliability of the damper.

In addition to the effects described above, specific effects of the present invention will be described below together with specific matters for practicing the invention.

### Brief Description of the Drawings

FIG. 1 is a front perspective view of a refrigerator.
FIG. 2 is a plan view showing a pillar unfolded in a state where a pair of doors are closed.
FIG. 3 is a plan view showing the pillar folded in a state where the pillar-mounted door is opened.
FIG. 4 illustrates the rear surfaces of a pair of doors equipped with a pair of damper assemblies, respectively.
FIG. 5 is an exploded perspective view of a damper assembly mounted on one door.
FIG. 6 illustrates a damper assembly.
FIG. 7 is an exploded perspective view of the damper assembly.
FIG. 8 is a rear view of a damper cover.
FIG. 9 is a front view of a damper case.
FIG. 10 is a front view of the damper assembly.
FIG. 11 is an exploded perspective view of the damper.
FIG. 12 is a cross-sectional side view of the damper.
FIG. 13 is a side cross-sectional view of the damper when the damper is compressed and the ring passes through a first inner diameter section, and FIG. 14 is a side cross-sectional view of the damper when the damper is compressed and the ring passes through a second inner diameter section.
FIG. 15 is a side cross-sectional view of the damper when the damper is returned and the ring passes through the second inner diameter section, and FIG. 16 is a side cross-sectional view of the damper when the damper is returned and the ring passes through the first inner diameter section.
FIG. 17 is a front view showing the oil inflow path formed by a piston, a ring, and a bracket.
FIG. 18 is a side view showing an oil inlet when the damper is compressed and the ring is brought into contact with a first piston portion.
FIG. 19 is a front view showing the inlet of an oil flow path formed in the piston.
FIG. 20 is a side view showing an oil outlet when the damper is compressed, so that the ring is brought into contact with the first piston portion.
FIG. 21 is a front view showing the outlet of the oil flow path formed in the piston.
FIG. 22 is a cross-sectional side view showing the oil flow path of the oil when the damper is compressed, so that the ring is brought into contact with the first piston portion.
FIG. 23 is a side view showing a state where the damper is returned, so that the ring is brought into contact with the bracket.
FIG. 24 is a cross-sectional view showing a third flow path.
FIG. 25 is a side cross-sectional view showing the damper assembly in a state where the damper is extended to maximum length.
FIG. 26 is a side cross-sectional view showing the damper assembly in a state where the damper is compressed to maximum.
FIG. 27 is a graph showing the closing speed of a door on which no damper is mounted.
FIG. 28 is a graph showing the closing speed of a door on which a damper with a constant damping force is mounted.
FIG. 29 is a graph showing the closing speed of a door on which a damper including a section where the damping force changes is mounted.

### Mode for Invention

The purposes, features and advantages described above will be described in detail below with reference to the accompanying drawings, so that a person having ordinary knowledge in the technical field to which the present invention pertains can easily practice the technical idea of the present invention. In describing the present invention, if it is determined that a detailed description of a known technology related to the present invention may unnecessarily obscure the gist of the present invention, the detailed description thereof will be omitted. Hereinafter, preferred embodiments of the present invention will be described in detail with reference to the accompanying drawings. **In** the drawings, like reference symbols are used to refer to like or similar components.

Although the terms "first", "second", and so on are used to describe various components, these components are not limited by these terms. These terms are merely used to distinguish one component from another component, and unless specifically stated to the contrary, it should be understood that a first component may also be a second component.

Throughout the specification, unless specifically stated to the contrary, each element may be singular or plural.

Hereinafter, the phrase "any configuration is disposed in the upper side of (or in the lower side of) a component" or "on (or below) a component" may mean not only that any configuration is disposed in contact with the upper surface (or lower surface) of said component, but also that another configuration may be interposed between said component and any configuration disposed on (or below) said component.

Additionally, when a component is described as being "connected," "coupled," or "contacted" to another component, it should be understood that although the both components may be directly connected, coupled or contacted to each other, a third component may also be "interposed" between the both components, or the both components may be "connected," "coupled," or "contacted" to each other through a third component.

As used herein, singular expressions include plural expressions unless the context clearly dictates otherwise. Herein, the terms "be comprised of" or "comprise" should not be construed to necessarily include all of the various components or various steps described in the specification, and should be construed to mean that some of the components or some of the steps may not be included, or that additional components or steps may be included.

Throughout the disclosure, the phrase "A and/or B" means A, B, or A and B, unless otherwise specified, and the phrase "C to D" means equal to or greater than C and equal to or smaller than D unless otherwise specified.

Hereinafter, an ice making device and an ice making method according to some embodiments of the present invention will be described.

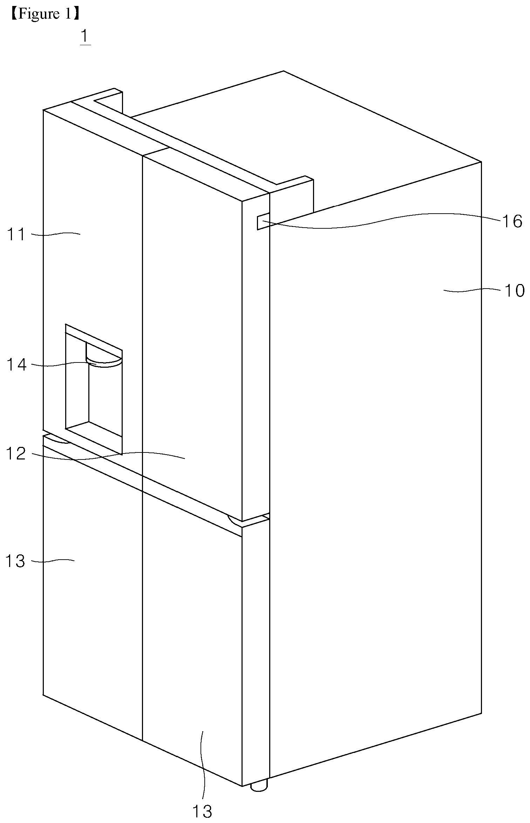

Referring to FIGS. 1 to 5, every major components constituting a refrigerator equipped with a damper assembly according to an embodiment of the present invention will be described.

A refrigerator 1 may have an exterior formed by a cabinet 10 with one or more storage chambers therein as storage spaces for products, and by one or more doors 11, 12, 13 configured to open and close the open front side of the cabinet 10.

The cabinet 10 may include an outer case (not shown) and an inner case (not shown) coupled to the inside of the outer case (not shown).

The cabinet 10 may have a box shape with an open front side, and be divided into one or more storage spaces to include a cooling chamber and/or a freezing chamber.

For example, in the upper portion of the cabinet 10, there may be positioned an upper storage chamber which can be opened and closed by a pair of upper doors 11, 12, while in the lower portion of the cabinet 10, there may be positioned a lower storage chamber which can be opened and closed by a pair of lower doors 13.

The upper storage chamber may be the cooling chamber, and the lower storage chamber may be the freezing chamber; however, the embodiments are not limited to this.

The first door 11 and the second door 12, which are the pair of upper doors 11, 12, may be rotary doors which open and close the storage chamber by rotating by means of a pair of hinges 16 installed on the sides of the cabinet 10, respectively.

Further, the lower door 13 may also be a rotary door, but it is not limited to this, and the lower door 13 may also be a drawer-type door configured to open and close the storage chamber in a sliding manner.

The first door 11 may be equipped with a dispenser 14 which can dispense drinking water and ice to a user.

Along one side of the first door 11 a pillar 15 may be installed to extend in an up and down direction.

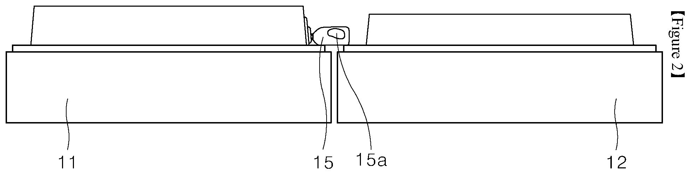

As shown in FIG. 2, when the first door 11 is closed, the pillar 15 may be kept unfolded, thereby reducing the cold air leakage which would otherwise occur through the gap between the first door 11 and the second door 12.

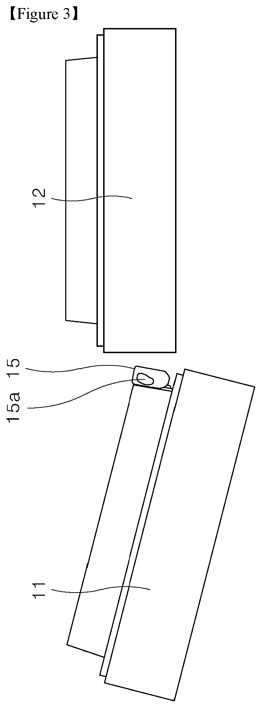

As shown in FIG. 3, when the first door 11 is opened, the pillar 15 may be rotated to be folded to one side of the first door 11, while when the first door 11 is closed, the pillar may be rotated to be unfolded again.

The pillar 15 may be rotated due to the fact that the pillar cam 15a formed at the top of the pillar 15 is brought into contact with the cam of the pillar rotation member (not shown) installed at the top of the cabinet 10 when opening or closing the first door 11.

The pillar 15 may act as a resistance to provide a resisting force to the first door 11 when the first door 11 is closed.

However, it is difficult for only the resisting force provided by the pillar 15 to effectively suppress the first door 11 from bouncing when the first door 11 collides against the cabinet 10 by the closing movement thereof.

In view of the above, the refrigerator 1 may be equipped with a damper assembly 20 which can provide damping force to the first door 11 when the first door 11 is closed, thereby enabling the first door 11 to close smoothly and reducing the bounce of the first door 11.

For example, the damper assembly 20 may be mounted on a first door 11 that opens and closes through a rotational motion, but the embodiments are not limited to this, and it may also be mounted within the cabinet 10 or other component of the refrigerator 1 so as to collide with the first door 11.

In this specification, the damper assembly 20 will be described based on an embodiment in which it is mounted on the rear surface of the first door 11 configured to be opened and closed by its rotational motion.

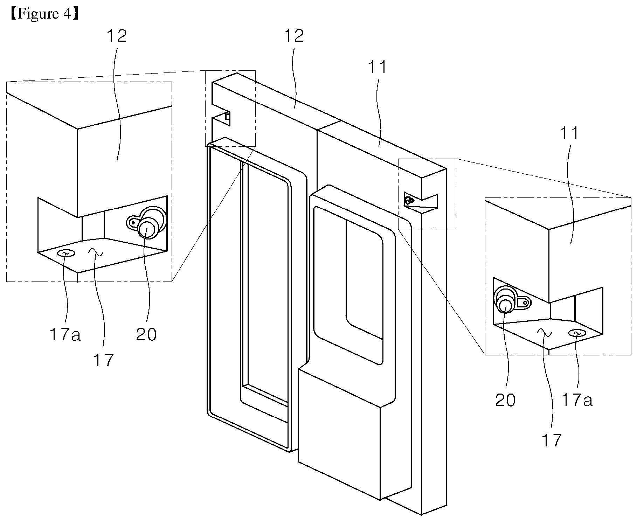

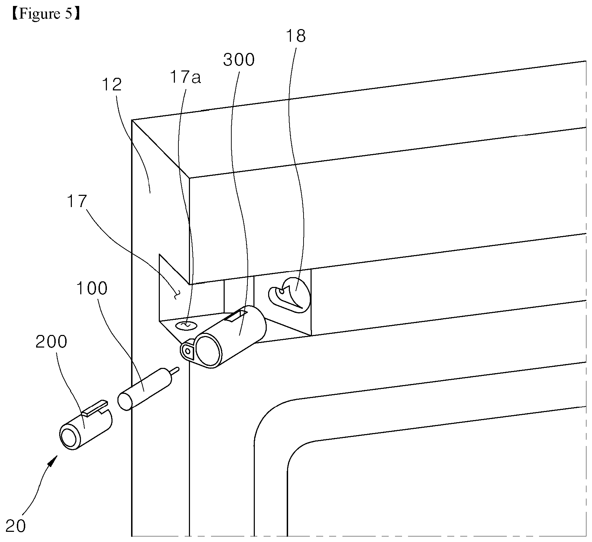

Referring to FIGS. 4 and 5, on each of one side of the upper region of the rear surface of the first door 11 and one side of the upper region of the rear surface of the second door 12, there may be formed a hinge mounting space 17 into which the hinge 16 is inserted and a hinge mounting portion 17a on which the hinge 16 can be mounted to provide a rotation axis.

The hinge mounting space 17 may be positioned adjacent to one side of the cabinet 10, and formed to have sufficient space for the hinge 16 to be inserted and operated.

As an example, in the hinge mounting space 17 the damper assembly 20 may be installed.

The damper assembly 20 may be operated to perform a linear reciprocating movement in the forward and backward directions.

Therefore, in the hinge mounting space 17, there may be formed a damper assembly mounting portion 18 providing a space into which at least a portion of the damper assembly 20 can be inserted and fixed in a horizontal direction.

For example, the damper assembly mounting portion 18 may be formed on each of the rear surfaces of the first door 11 and the second door 12 so that it can be disposed diagonally toward one of the opposite sides of the cabinet 10 when the first door 11 or the second door 12 is closed.

Therefore, in the case where the damper assembly 20 has been mounted in the damper assembly mounting portion 18, the damper assembly 20 can also be disposed diagonally toward one of the opposite sides of the cabinet 10 when the first door 11 or the second door 12 is closed.

As the damper assembly 20 is disposed diagonally in this way, the opposing structure with which the damper assembly 20 collides may be the hinge 16.

However, the embodiments are not limited thereto, but the opposing structure with which the damper assembly 20 collides may be various components constituting the cabinet 10 or the refrigerator 1.

Since the mounting locations of the damper assembly 20 are the first door 11 and the second door 12, which are structures performing rotational movement, the damper assembly 20 may undergo a lateral force applied thereto due to the rotation of the first door 11 and the second door 12.

In particular, in the case where the damper assembly 20 is installed in the hinge mounting space 17, the damper assembly 20 is positioned within a relatively small rotation radius, so that a stronger lateral force may be applied when the first door 11 and the second door 12 rotate.

However, the damper assembly 20 according to the present specification may include a damper cover 200 and a damper case 300 that surround a damper 100 to reduce damage to the damper 100 even when the lateral force is applied, thereby assisting the damper assembly 20 in performing the linear movement.

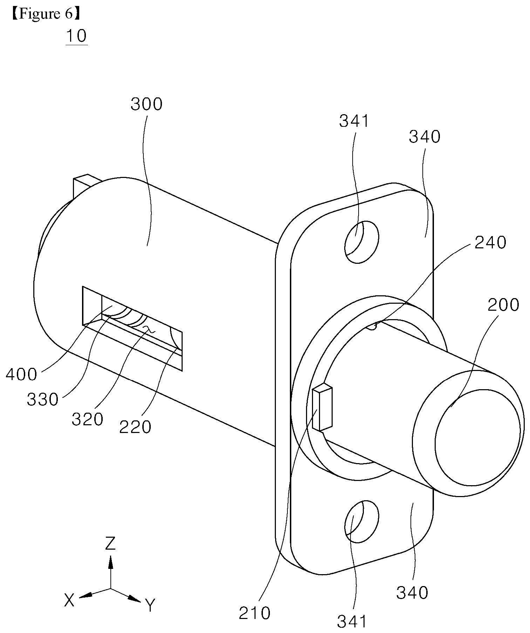

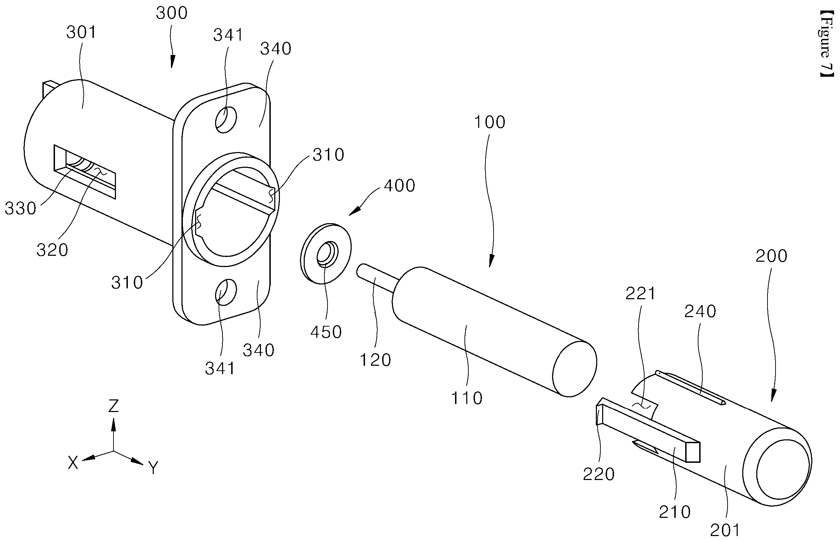

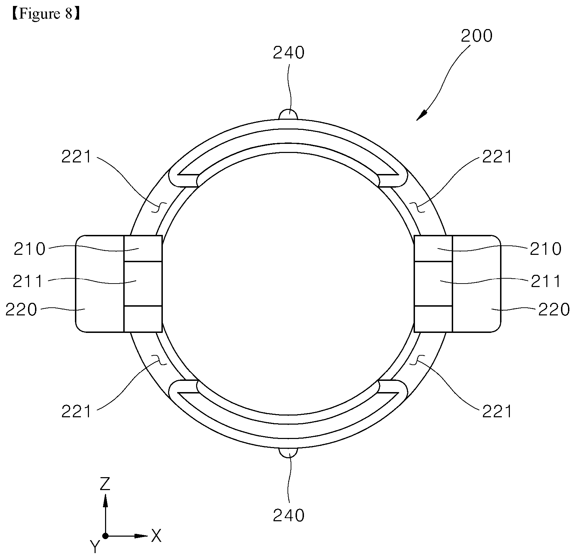

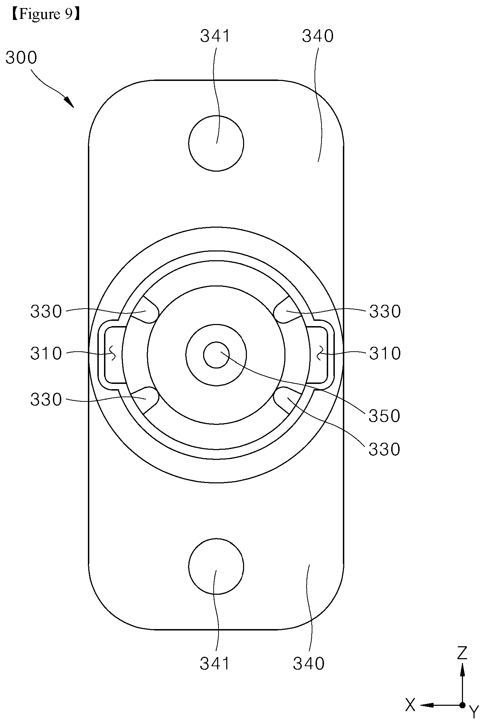

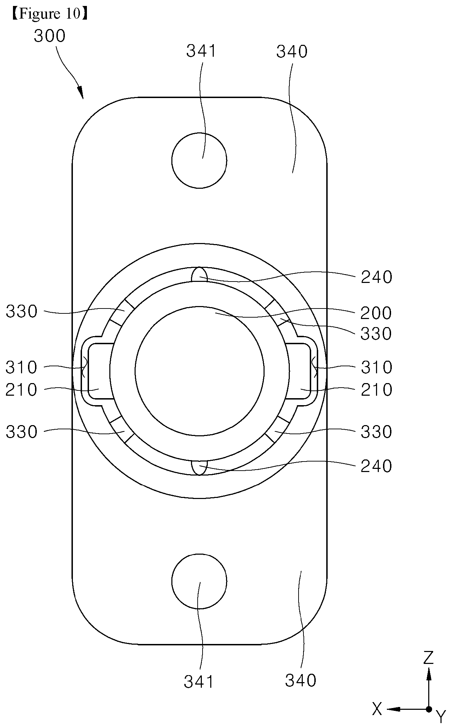

Hereinafter, the damper assembly 20 according to the present specification will be described with further reference to FIGS. 6 to 10.

The forward and backward directions of the damper assembly 20 described in this specification may be directions along the Y-axis as shown in FIG. 6, the upward and downward directions may be directions along the Z-axis, and the rightward and leftward directions may be directions along the X-axis.

The damper assembly 20 may include the damper 100.

The damper 100 may include a housing 110 forming its exterior.

The shape of the housing 110 may be an outer circumferential surface of a cylindrical shape with a closed front end and an open rear end.

The damper 100 may include a rod 120 extending to protrude from the rear end of the housing 110.

The rod 120 may be a cylindrical rod shape extending in one direction.

The rod 120 is inserted through the open rear end of the housing 110, so that it can perform the reciprocating sliding motion in the forward and backward directions.

To one side of the rod 120 a piston 170 may be fixed to be positioned within the housing 110, and a portion of the other side of the rod 120 may protrude from the rear end of the housing 110.

The piston 170 will be described in further detail later.

Since the rod 120 is formed to have a small diameter compared to the housing 110, if a lateral force is applied to the damper 100 regardless of the reciprocating sliding motion of the damper 100 in the forward and backward directions, the rod 120 may be easily bent or damaged, causing the damper 100 not to operate properly.

In view of this, the damper assembly 20 according to the present specification may protect the damper 100 with the damper cover 200 which surrounds the front end of the damper 100 and at least a portion of the outer circumferential surface of the damper 100 and with the damper case 300 which surrounds the rear end of the damper 100 and at least a portion of the outer circumferential surface of the damper 100.

The damper cover 200 may include a cover body 201 having an outer circumferential surface of an overall cylindrical with a closed front end and an open rear end.

A portion of the outer circumferential surface of the damper 100 including the front end and extending from the front end of the damper 100 may be inserted through the open rear end of the cover body 201, so that the front end of the damper 100 may be positioned within the damper cover 200 so as to bring the front end of the damper 100 into contact with the rear surface of the front end of the cover body 201.

Therefore, the inner diameter of the cover body 201 may be formed to be greater than the outer diameter of the housing 110.

The cover body 201 may include a pair of rails 210 extending in the forward and backward directions.

The pair of rails 210 may be formed to protrude outwards from the outer surface of the cover body 201 up to a predetermined thickness, and may be disposed to face each other on the left and right sides of the outer surface of the cover body 201.

The rear end of the rail 210 may be formed to protrude further rearward than the rear end of the cover body 201.

At the rear end of the rail 210 a catch 220 may be formed.

The catch 220 may be formed in a hook shape so as to restrict movement of the damper cover 200 through the hook connection with the damper case 300 when the damper cover 200 is inserted into the damper case 300.

For example, the front end of the catch 220 may be formed to protrude further outwards than the rail 210 to form a step between it and the rail 210, so that the front end of the catch 220 may be hook-connected with a slit 320 of the damper case 300.

The slit 320 of the damper case 300 will be described in more detail later.

The rear end of the catch 220 may be formed to have a downward slope as it goes rearward, so that the damper cover 200 may be guided to be easily inserted into the inside of the damper case 300.

The pair of rails 210 may be formed with an elastic material and in a shape so as to be slightly bent in directions toward each other when the damper cover 200 is inserted into the inside of the damper case 300, so that the insertion of the damper cover 200 can be done easily.

On the inner surface of the rail 210, there may be formed a reinforcing part 211 extending in the forward and backward directions along the direction in which the rail 210 extends, thereby reinforcing the strength of the rail 210.

In the outer surface of the cover body 201, there may be formed a plurality of insertion portions 221 in the form of an opening.

For example, the insertion portion 221 may be shaped such that a portion of of the cover body 201 forward from the rear end is opened.

Thereby, the front end of the insertion portion 221 can be positioned further forward than the rear end of the cover body 201.

Based on one rail 210, a pair of insertion portions 221 may be formed to be disposed on opposite sides of the rail 210, respectively.

The damper cover 200 may include a pair of first guide ribs 240 protruding from the outer surface of the cover body 201 along the forward and backward directions.

The pair of first guide ribs 240 may be positioned on the upper outer surface and the lower outer surface of the cover body 201, respectively.

The first guide rib 240 may be formed to be long and narrow from the rear end of the cover body 201 up to a certain forward position.

The first guide rib 240 prevents the entire outer circumferential surface of the cover body 201 from coming into contact with the inner circumferential surface of the damper case 300 when the damper cover 200 is inserted into the damper case 300 and moved therein in the forward and backward directions, thereby enabling the reciprocating sliding motion of the damper cover 200 to be guided while reducing the friction that may occur between the cover body 201 of the damper cover 200 and the inner circumferential surface of the damper case 300.

Meanwhile, the damper case 300 may include a case body 301 having an overall cylindrical outer surface with an open front end and a closed rear end.

A portion of the outer circumferential surface of the damper 100 including the rear end and extending from the rear end of the damper 100 may be inserted through the open front end of the case body 301, so that the rod 120 of the damper 100 can be positioned within the damper case 300 so as to be supported by the front surface of the rear end of the case body 301.

Therefore, the inner diameter of the case body 301 may be formed greater than the outer diameter of the housing 110.

On the front surface of the rear end of the case body 301, there may be formed a case groove 350 which is recessed rearward to support the rod of the damper 100.

The case groove 350 may be formed in a shape corresponding to the rod 120 so as for the rear end of the rod 120 to be inserted and fixed therein, thereby aligning the engagement position of the rod 120 and more effectively restraining the movement of the rod 120 in the upward, downward, rightward, and leftward lateral directions.

Since the damper 100 is inserted into the damper case 300 in a state in which it is inserted in the damper cover 200, the case body 301 and the housing 110 of the damper 100 do not directly contact each other, while the inner surface of the case body 301 and the outer surface of the cover body 201 can directly contact each other.

Therefore, the inner diameter of the case body 301 may be formed greater than the outer diameter of the cover body 201.

On the inner surface of the case body 301, there may be formed a pair of guide portions 310 which guide the movement of the pair of rail 210 of the damper cover 200.

The guide portion 310 may be formed to extend rearward from the front end of the case body 301 in a form which is recessed into the inside of the case body 301.

The thickness of the guide portion 310 recessed into the inside of the case body 301 may substantially correspond to the thickness by which the rail 210 of the damper cover 200 protrudes outwards.

The pair of guide portions 310 may be formed on opposite sides of the inner surface of the case body 301 to face each other.

Thereby, the rail 210 of the damper cover 200 inserted into the inside of the damper case 300 can perform the reciprocating sliding motion along the guide portion 310 in the forward and backward directions.

On the side surfaces of the case body 301, there may be formed the pair of slits 320 to face each other, each slit being open and extending along the guide portion 310 so as to overlap with a portion of the guide portion 310.

Specifically, the slit 320 may be formed in a form in which both the outer surface and the inner surface of the case body 301 are open to penetrate through it.

The slit 320 may be disposed near to the rear portion based on the forward and backward directions of the case body 301.

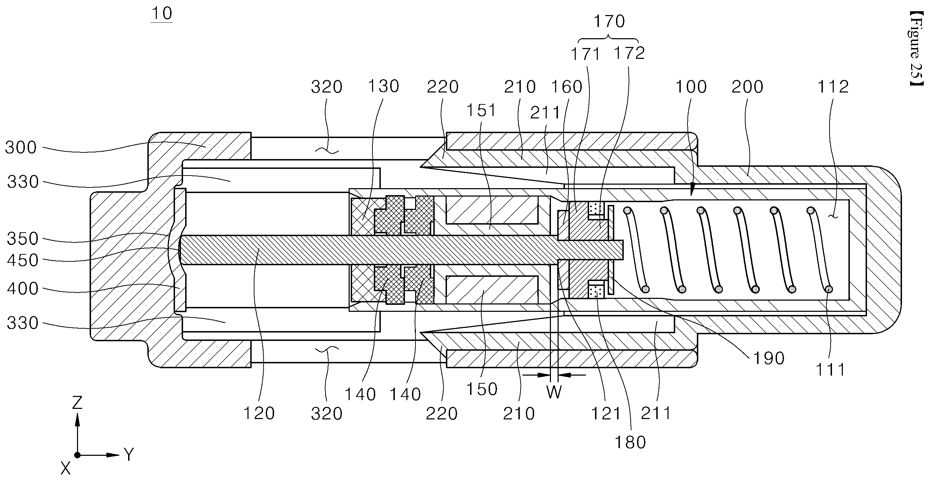

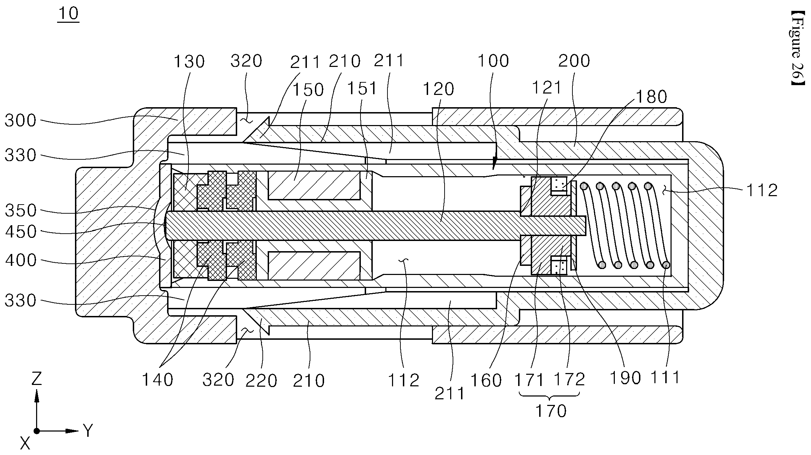

Referring further to FIGS. 25 and 26, the catch 220 of the damper cover 200 may be inserted into the slit 320 to perform the reciprocating sliding motion in the forward and backward directions along the slit 320.

The damper 100 may be compressed or extended in the forward and backward directions.

As shown in FIG. 25, when the damper 100 is extended to the maximum, the front end of the catch 220 of the damper cover 200 can be restrained by the front end of the opened slit 320, thereby preventing further extension of the damper 100.

Thus, by being restrained by the slit 320, the catch 220 of the damper cover 200 can control the maximum extension distance of the damper 100.

In addition, as shown in FIG. 26, when the damper 100 is compressed, the catch 220 of the damper cover 200 may be released from the restraint by the slit 320 to move freely backward.

Therefore, the forward and backward direction length of the slit 320 can control not only the maximum forward and backward direction movement distance of the catch 220, but also the maximum compression distance of the damper 100 and the maximum compression distance of the damper cover 200.

On the inner surface of the case body 301, there may be formed a plurality of second guide ribs 330 which are formed so as to protrude inwardly and extend in the forward and backward directions.

The second guide rib 330 may be formed to extend forward from the rear end of the case body 301 to have a narrow width.

The front end of the second guide rib 330 may be extended to such an extent that it does not exceed the front end of the slit 320.

A pair of second guide ribs 330 may be positioned on the upper inner surface and the lower inner surface of the slit 320, respectively.

In this way, by forming the second guide ribs 330 on opposite sides of the opened slit 320, it is possible to reinforce the strength of the case body 301 which has been weakened by the open slit 320.

The second guide rib 330 can guide the insertion portion 221 of the damper cover 200 to perform the reciprocating sliding motion along the second guide rib 330 when the damper cover 200 is inserted into the damper case 300 and performs the reciprocating sliding motion in the forward and backward directions.

Specifically, when the damper cover 200 is in an extended state, the second guide rib 330 is not inserted into the insertion portion 221, while when the damper cover 200 is in a compressed state, a portion including the front end of the second guide rib 330 can be inserted into the insertion portion 221.

The case body 301 may include one or more fastening parts 340 protruding outward from the outer circumferential surface of the case body 301.

For example, a pair of fastening parts 340 may be formed so as to protrude and extend in the upward and downward directions of the case body 301, respectively.

In the fastening part 340, there may be formed a fastening hole 341 penetrating through it in the forward and backward direction.

When the damper assembly 20 is combined with a fixture object to which it will be fixed, a fastening member such as a screw can fasten the fastening part 340 to the fixture object through the fastening hole 341.

The fastening part 340 may be formed in a front portion of the case body 301 adjacent to the open front end.

Thereby, the portion of the case body 301 protruding forward based on the fastening part 340 may be much smaller than the portion of the case body 301 protruding backward.

Referring to FIG. 5, the damper assembly 20 may be inserted into and fixed to the damper assembly mounting portion 18 formed to have a predetermined insertion hole.

In this case, the portion of the case body 301 positioned in the rear side of the fastening part 340 may be inserted into the damper assembly mounting portion 18 without being exposed to the outside.

And the fastening part 340 may be fastened to the damper assembly mounting part 18 to fix the damper assembly 20 to the rear surface of the first door 11.

Thereby, only the portion of the case body 301 positioned in front of the fastening part 340 is exposed to the outside, which not only increases the space utilization of the hinge mounting space 17 into which the damper assembly 20 is inserted, but also provides excellent design aesthetic.

Between the damper case 300 and the damper 100, specifically, between the damper case 300 and the rod 120, a reinforcing plate 400 may be disposed.

The reinforcing plate 400 may be formed of a high-strength material, thereby preventing the damper case 300 from being damaged due to the load concentration which would otherwise occur on the rear surface of the damper case 300 by the rod 120.

In the center of the reinforcing plate 400, there may be formed a recessed groove 450 which protrudes rearward so that an end of the rod 120 can be inserted into and fixed to it.

Specifically, one side of the recessed groove 450 facing the rear surface of the damper case 300 may be formed to protrude so as to be fixed to the case groove 350, and the other side of the recessed groove 450 facing the rod 120 of the damper 100 may be formed to be recessed so that the rod 120 can be fixed to it.

Thus, the recessed groove 450 may be formed in a shape corresponding to the rod 120 so as for the rear end of the rod 120 to be inserted and fixed therein, thereby aligning the engagement position of the rod 120 and more effectively restraining the movement of the rod 120 in the upward, downward, rightward, and leftward lateral directions.

Additionally, the one side of the recessed groove 450 may be formed in a shape corresponding to the case groove 350 so that the recessed groove 450 can be inserted into and fixed in the case groove 350, thereby more effectively restraining the movement of the reinforcing plate 400 and the rod 120 in the upward, downward, rightward, and leftward lateral directions.

As described above, the damper cover 200 of the damper assembly 20 may be inserted into the inside of the damper case 300, so that it may perform the reciprocating sliding motion along the inner circumferential surface of the damper case 300 in the forward and backward directions.

In this case, the motion of the damper cover 200 is dependent on the motion of the damper 100, and so when the damper 100 is compressed or extended, the damper cover 200 can also be compressed or extended along the inner circumferential surface of the damper case 300 together with the damper 100.

As described above, the damper assembly 20 according to the present specification can protect the exterior of the damper 100 with the damper cover 200 and the damper case 300, so that it is possible to reduce the bending of or damage to the rod 120 of the damper 100, which would otherwise occur when the lateral force generated by the structure performing rotational movement is directly applied to the damper 100.

Additionally, since the damper cover 200 and the damper case 300 assist the reciprocating sliding motion of the damper 100 in the forward and backward directions through the mutual fastening relationship between the catch 220 of the rail 210 and both the guide portion 310 and the slit 320, the reciprocating sliding motion of the damper 100 in the forward and backward directions can be stably performed even when the lateral force generated by the structure performing rotational motion is applied to the damper assembly 20.

Additionally, the damper assembly 20 according to the present specification can provide an efficient assembly process as well as a reduction in the number of processes, because it can allow the damper 100, the damper cover 200, and the damper case 300 to be combined through the hook connection of the catch 220 of the rail 210 with the slit 320 by utilizing the elasticity of the damper 100 itself without a separate fastening member such as a screw.

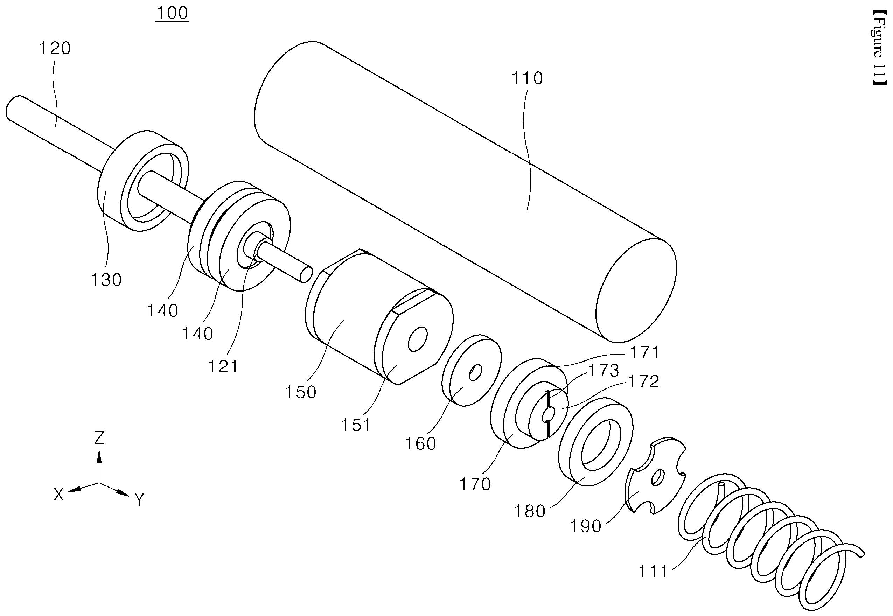

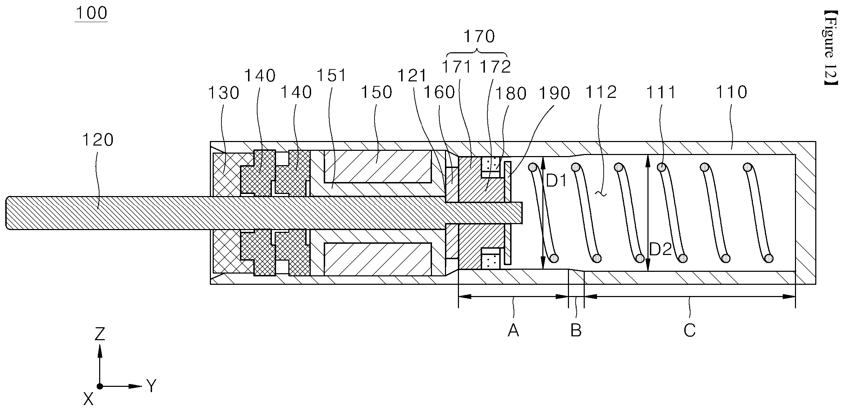

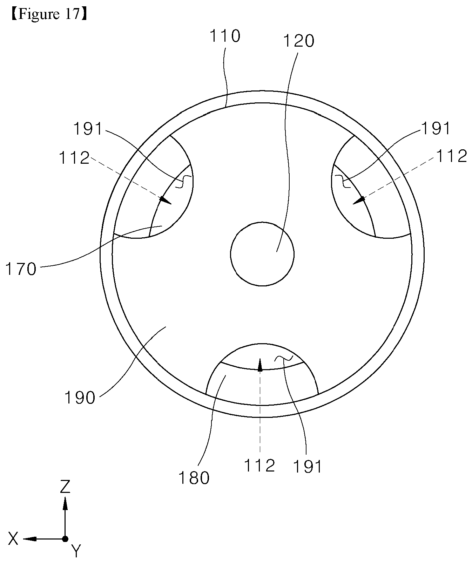

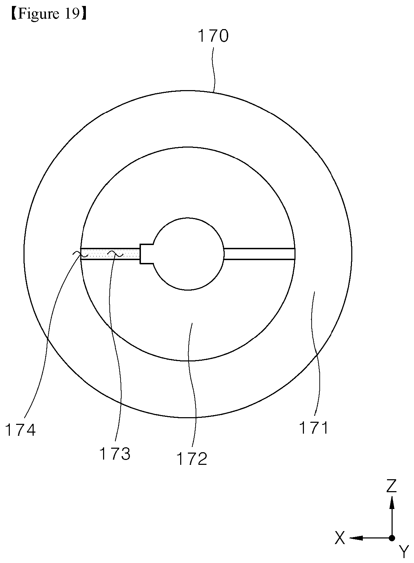

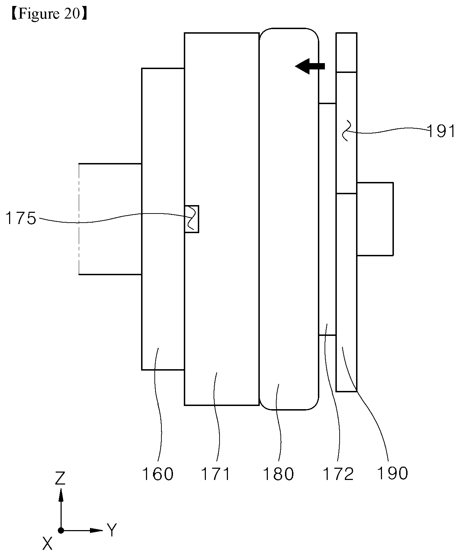

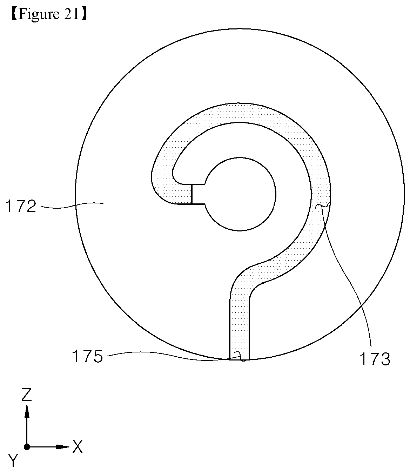

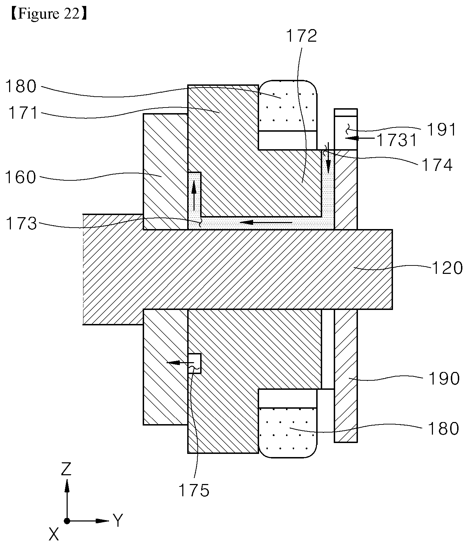

Hereinafter, with further reference to FIGS. 11 to 24, the damper 100 according to the present specification will be described in detail.

The damper 100 may have a guide 130, a sealer 140, a sponge 150, a sponge cover 151, a washer 160, a piston 170, a ring 180, and a bracket 190 which are sequentially connected and disposed inside the housing 110 forming the exterior so that their centers are penetrated by the rod 120 from one side to the other side of the rod 120.

The cylindrical housing 110 may provide a cylinder space whose inside is filled with oil 112.

The guide 130 may serve to hold the rod 120 so that it does not shake up, down, left, or right when the rod 120 performs the reciprocating translational motion, and may serve to prevent the other components inside the housing 110 from leaving their positions.

The guide 130 may be made of a plastic material, for example, polyamide nylon resin.

The sealer 140 may serve to prevent oil 112 filled inside the housing 110 from leaking to the outside, and may substantially serve to seal the housing 110.

The inner diameter of the sealer 140 may be engaged with the outer diameter of the rod 120 to be in direct contact with each other, and the outer diameter of the sealer 140 may be engaged with the inner diameter of the housing 110 to be in direct contact with each other, thereby blocking a gap through which oil 112 may leak.

By providing a plurality of sealers 140, the leakage prevention effect can be further enhanced.

The sealer 140 may be made of an oil-resistant rubber material, for example, nitrile butadiene rubber NBR.

The sponge 150 may play a role in compensating the volume so that, in the case where the piston 170 moves forward as the damper 100 is compressed, the oil 112 can move in the opposite direction to the forward movement of the piston 170.

The sponge 150 may be formed of a porous material, so that when the damper 100 is compressed, the sponge 150 may be also compressed, thereby compensating for the volume.

The sponge 150 may be made of a plastic material, for example, a synthetic resin.

The sponge cover 151 may assist the sponge 150 in restoring the shape when the damper 100 returns after the sponge 150 has been compressed by the oil due to the compression of the damper 100.

The sponge 150 may be disposed to surround the periphery of the sponge cover 151.

The sponge cover 151 may be made of a plastic material, for example, polyoxymethylene (POM).

The washer 160 may prevent the piston 170 from being removed from the rod 120 when the rod 120 is inserted into the piston 170.

One side of the washer 160 may be in direct contact with the rod 120 so as to be engaged with the step portion 121 having the decreased diameter of the rod 120.

The other side of the washer 160 may be engaged with one side of the piston 170 to be in direct contact with each other, thereby forming a flow path together with the piston 170, through which oil 112 flows.

Specifically, the washer 160 may be in contact with one side of the first piston portion 171 of the piston 170.

The washer 160 may be made of a metal material, for example, cold rolled steel sheet (SPCC).

The piston 170 may include an oil flow path 173 through which oil 112 can flow when the damper 100 is compressed.

The piston 170 may be configured with the first piston portion 171 and a second piston portion 172 which protrudes from the first piston portion 171 toward the bracket 190 and has an outer diameter smaller than that of the first piston portion 171.

The piston 170 may be made of a plastic material, for example, a polyamide nylon resin.

The bracket 190 may be disposed to face the second piston portion 172 of the piston 170.

For example, the end of the rod 120 may be riveted to prevent the piston 170 from being removed from the rod 120, in which case the bracket 190 can prevent the piston 170 from being damaged during the rivet treatment.

One side of the bracket 190 may be engaged with one side of the second piston portion 172 of the piston 170 to be in contact with each other, thereby forming a flow path together with the piston 170, through which oil 112 flows.

The bracket 190 may have a plurality of recessed portions 191 which are each recessed toward the center and are formed along the outer circumferential surface to be spaced apart from each, and through which the oil 112 may flow.

The bracket 190 may be made of a metal material, for example, cold rolled steel sheet (SPCC).

The ring 180 may be disposed between the piston 170 and the bracket 190.

Specifically, the inner diameter of the ring 180 may be formed to be greater than the outer diameter of the second piston portion 172, so that the ring 180 may be disposed to surround the periphery of the second piston portion 172 while being spaced apart from the outer circumferential surface of the second piston portion 172 by a predetermined distance.

Therefore, the ring 180 may be disposed between the first piston portion 171 and the bracket 190.

The thickness of the ring 180 in the forward and backward directions may be formed to be thinner than the thickness of the second piston portion 172 positioned between the first piston portion 171 and the bracket 190, so that the ring 180 can performing the reciprocating sliding motion in the forward and backward directions between the first piston portion 171 and the bracket 190 along the second piston portion 172.

For example, when the damper 100 is compressed, the ring 180 can move in the opposite direction to the compression direction to prevent the oil 112 from flowing between the outer diameter of the piston 170 and the inner diameter of the housing 110 and to guide the oil 112 to flow through the oil flow path 173 of the piston 170.

In this case, the one side of the ring 180 may be in contact with the first piston portion 171, and the other side of the ring 180 may be spaced apart from the bracket 190.

Additionally, when the damper 100 is returned, the ring 180 can move in the opposite direction to the return direction to create a gap which allows the oil 112 to flow in the opposite direction to the return direction.

In this case, the other side of the ring 180 may be in contact with the bracket 190, and the one side of the ring 180 may be spaced apart from the first piston portion 171.

The ring 180 may be a plastic, for example a fluororesin.

Preferably, the ring 180 may be made of Teflon.

More preferably, by additionally containing 10% to 30% of carbon component relative to the total weight of Teflon, the change in the dimensions of the ring 180 can be further reduced.

Since Teflon has high strength and low frictional resistance compared to rubber, it can reduce damage caused by strong friction occurring inside the damper 100, thereby improving the repetition reliability of the damper 100.

Therefore, it is preferable that the ring 180 be formed of a material having a low friction coefficient and a high elastic modulus compared to the sealer 140 formed of a material having a high frictional resistance and an elastic force to provide a strong sealing force.

The elastic modulus may refer to the stiffness of a material, which may refer to its ability to resist deformation.

Therefore, a material with a low elastic modulus may have a property of high strain resistance.

In this way, since the ring 180 can include and be formed of a material with high strength and low frictional resistance, the fluid flow by the oil 112 can be improved.

In this way, when the fluid flow inside the housing 110 is improved, the friction between the housing 110 and the ring 180 reciprocating along the inner circumferential surface of the housing 110 can be reduced, so that a temporary stopping phenomenon of the damper 100 which would otherwise occur due to frictional force can be reduced.

The rod 120 is formed to extend long in the forward and backward directions, and the damper 100 can provide a damping force by the reciprocating sliding motion of the rod 120.

The step portion 121 with a reduced inner diameter may be formed in the front portion of the rod 120.

The rod 120 may be made of a metal material, for example stainless steel.

The components fixed to the rod 120 described above may move together with the rod 120 performing the reciprocating sliding motion or may remain fixed regardless of the reciprocating sliding motion according to whether they are in the front side or in the rear side of the step portion 121 of the rod 120.

Specifically, the guide 130, sealer 140, sponge 150, and sponge cover 151 may be disposed in the rear side of the step portion 121 so as to be fixed within the housing 110 without being affected by the reciprocating sliding motion of the rod 120.

And the washer 160, piston 170, ring 180, and bracket 190 may be disposed in the front side of the step portion 121 whose outer diameter is reduced compared to the outer diameter of the entire rod 120 so that they can perform the reciprocating sliding motion together when the rod 120 performs the reciprocating sliding motion.

Accordingly, the washer 160, piston 170, ring 180, and bracket 190 can perform the reciprocating sliding motion along the inner diameter of the housing 110 together with the rod 120.

An elastic member 111 may be disposed between the bracket 190 and the front end of the housing 110 so that the damper 100 can deliver force in the return direction when it returns after being compressed.

The elastic member 111 may be a spring 180.

The elastic member 111 may be made of a metal material, for example, stainless steel.

The damper 100 may include a first inner diameter section A, a second inner diameter section C, and an inner diameter change section B positioned between the first inner diameter section A and the second inner diameter section C.

The inner diameter D2 of the housing 110 in the second inner diameter section C may be formed to be greater than the inner diameter D1 of the housing 110 in the first inner diameter section A.

In the inner diameter change section B, the inner diameter of the housing 110 may have an inclined surface so that it continuously decreases or increases in one direction.

In this way, since the damper 100 includes the sections having different inner diameters, damping forces of different magnitudes can be provided by one damper 100.

Accordingly, the first inner diameter section A may be a first damping force section A that provides a first damping force; the second inner diameter section C may be a second damping force section C that provides a second damping force; and the inner diameter change section B may be a damping force change section B.

Therefore, the first damping force of the damper 100 provided in the first damping force section A may be greater than the second damping force of the damper 100 provided in the second damping force section C.

For example, the first damping force section A may be a damping section, the second damping force section C may be a non-damping section, and a transition may occur from the damping section to the non-damped section as the damper 100 is compressed.

In this way, when the damper 100 is compressed, the damper 100 according to the present specification can adjust the damping force by stages with the use of the changing inner diameter of the housing 110 by providing the stage therein, and thus it can be realized that the damping force of the small damper 100 is easily changed at a low cost without changing the viscosity of the oil 112 or adjusting the diameter of the oil flow path 173, which is the orifice of the piston 170.

For example, when the damper 100 is compressed, the ring 180 is pressed against the inner circumferential surface of the housing 110 in the damping section, thereby blocking the gap between the ring 180 and the housing 110 and allowing the oil 112 to flow only through the oil flow path 173 of the piston 170.

As the damper 100 continues to be compressed while passing through the damping section and then entering into the non-damping section, the gap between the ring 180 and the inner circumferential surface of the housing 110 increases, causing the oil 112 to flow through the gap instead of the oil flow path 173 of the piston 170, thereby reducing the damping force to produce a non-damping effect.

Hereinafter, the flow paths through which the oil 112 flows according to the compression and return of the damper 100 will be described in more detail.

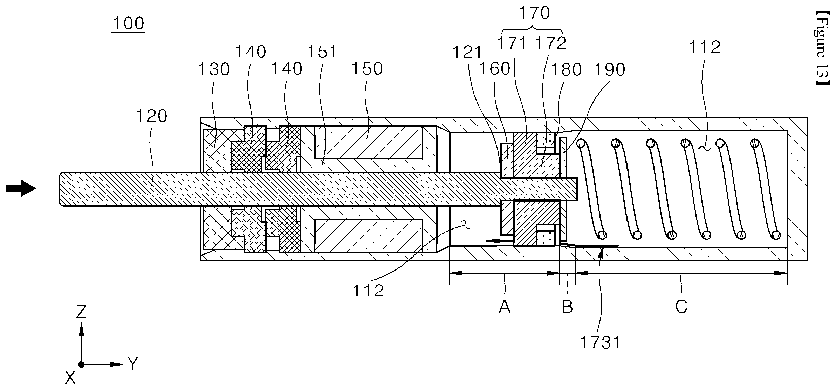

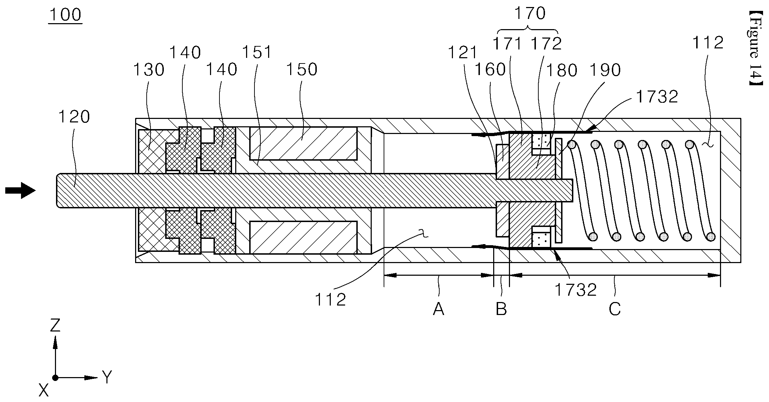

As shown in FIGS. 13 and 14, when the piston 170 is compressed by the compression of the rod 120, the ring 180 can be moved along the second piston portion 172 toward the location of the first piston portion 171 so that one side of the ring 180 can be brought into contact with one side of the first piston portion 171.

Referring to FIG. 13, when the piston 170 is compressed and the ring 180 passes through the first inner diameter section A, the oil 112 filled in the front side of the piston 170 can flow toward the rear side of the piston 170 through the first flow path 1731 formed with the oil flow path 173.

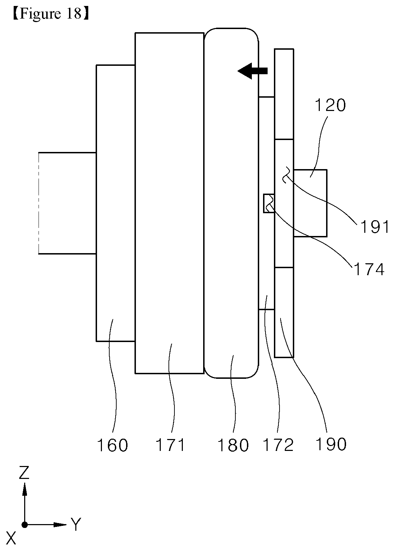

Referring further to FIGS. 18 to 22, on one side of the second piston portion 172, there may be formed an inlet 174 through which the oil 112 is introduced, and which is formed to extend toward the open center of the piston 170 and extend along the inside of the open center to the rear surface of the first piston portion 171.

On one side of the second piston portion 172, there may be formed an outlet 175, so that the oil 112 flowing along the inner side of the open center of the piston 170 can flow to the outside of the piston 170 through the outlet 175.

Specifically, the oil flow path 173 may be the first flow path 1731 formed to pass between the second piston section 172 in which the inlet 174 is formed and the bracket 190 in contact with it, between the open center of the piston 170 and the rod 120 penetrating through the open center of the piston 170, and between the first piston section 171 in which the outlet 175 is formed and the washer 160 in contact with it.

In order to minimize the deviation in damping force, it is preferable for the oil flow path 173 to be designed to have a structure in which it winds as long as possible and then exits.

Referring to FIG. 14, when the piston 170 is compressed and the ring 180 passes through the second inner diameter section C, the oil 112 filled in the front side of the piston 170 can flow toward the rear side of the piston 170 through a second flow path 1732 continuously formed between the outer diameter of the ring 180 and the inner diameter of the housing 110 and between the outer diameter of the first piston portion 171 and the inner diameter of the housing 110.

In the second inner diameter section C, since the inner diameter of the housing 110 increases compared to the first inner diameter section A, the gap occurs between the outer diameter of the ring 180 and the inner diameter of the housing 110, so that the oil 112 can flow through the second flow path 1732 rather than the first flow path 1731.

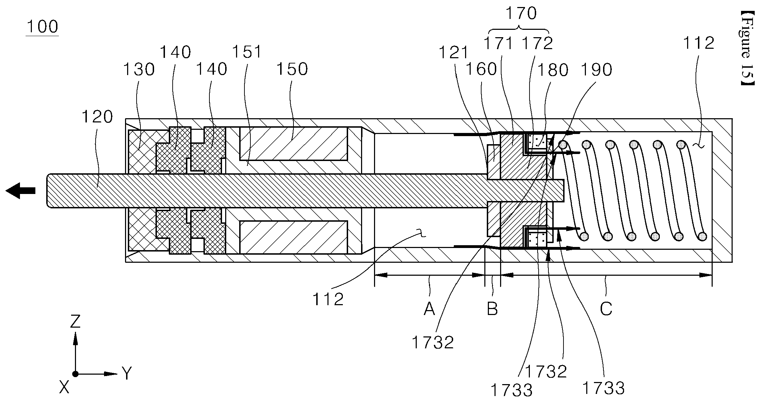

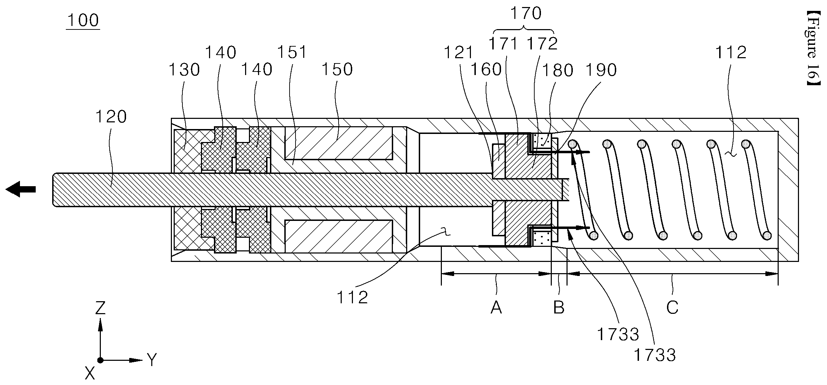

Meanwhile, as shown in FIGS. 15 and 16, when the piston 170 is returned by the return of the rod 120, the ring 180 can be moved along the second piston portion 172 toward the location of the bracket 190 so that the other side of the ring 180 can be brought into contact with one side of the bracket 190.

Referring to FIG. 15, when the piston 170 is returned and the ring 180 passes through the second inner diameter section C, the oil 112 filled in the rear side of the piston 170 can flow toward the front side of the piston 170 through the second flow path 1732 continuously formed between the outer diameter of the ring 180 and the inner diameter of the housing 110 and between the outer diameter of the first piston portion 171 and the inner diameter of the housing 110 and through a third flow path 1733 formed between the outer diameter of the second piston portion 172 and the inner diameter of the ring 180.

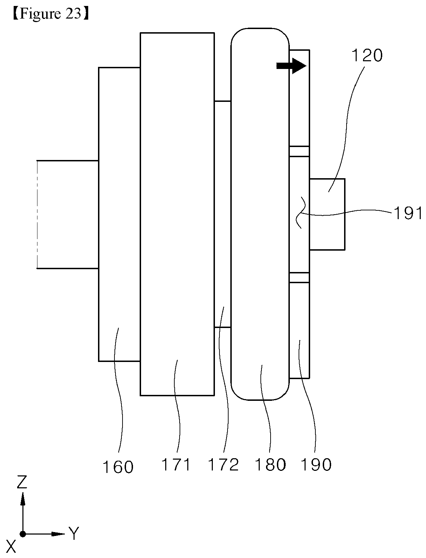

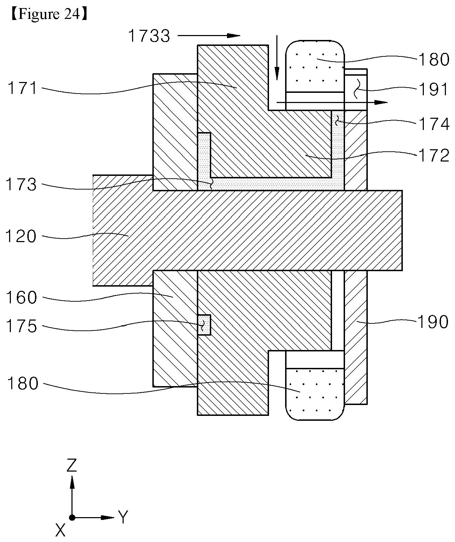

Referring further to FIGS. 23 and 24, as the other side of the ring 180 is brought into contact with one side of the bracket 190, the third flow path 1733 may be formed, which extends along the gap generated between the ring 180 and the first piston portion 171, passes between the outer diameter of the second piston portion 172 and the inner diameter of the ring 180, and leads to the recessed portion 191 of the bracket 190.

Referring to FIG. 16, when the piston 170 is returned and the ring 180 passes through the first inner diameter section A, the gap between the outer diameter of the ring 180 and the inner diameter of the housing 110 no longer exists, thereby closing the second flow path 1732, and thus the oil 112 filled in the rear side of the piston 170 can flow toward the front side of the piston 170 through the third flow path 1733 formed between the outer diameter of the second piston portion 172 and the inner diameter of the ring 180.

As described above, the damper assembly 20 according to the present specification uses a two-stage damper including the inner diameter change section B in which the inner diameter changes so as to provide different damping forces, so that at the time when the door is closed, the damper can provide a first damping force to the door, and then the damper can be changed to provide a second damping force smaller than the first damping force before the pillar 15 is operated.

Therefore, when the first door 11 is closed from the open state, the first damping force is primarily provided to the first door 11, and secondly, the second damping force and the third damping force by the resisting force generated by the rotation of the pillar 15 can be provided to the first door 11.

In this way, by reducing the damping force of the damper 100 at the time when the resisting force is exerted by the pillar 15, the user can properly close the first door 11 to which both the resisting force of the pillar 15 and the damping force of the damper 100 are exerted, without applying a great force, and the first door 11 can be guided to be closed smoothly.

In addition, by constructing the ring 180 included in the damper 100 and performing the reciprocating sliding motion together with the piston 170 with the use of a Teflon material having low friction and high strength, the damper assembly 20 according to the present specification can reduce damage to the ring 180 which would otherwise occur when the ring is repeatedly moved through the inner diameter change section B within the damper 100, thereby increasing the reliability of the damper 100.

For example, if the ring 180 is constructed with the use of a material having a high friction coefficient, such as rubber, the ring 180 may be torn or damaged without difficulty as it is repeatedly moved through the inner diameter change section B in which the inner diameter changes.

However, by constructing the ring 180 with the use of a material having a relatively low friction coefficient such as Teflon, the ring 180 can be prevented from being torn or damaged without difficulty even when it is repeatedly moved through the inner diameter change section B.

Additionally, since the ring 180 which is moved according to the compression and return motion has a low friction coefficient, it can have a reduced frictional force with the housing 110 in the damping section where it is brought into contact with the housing 110, so that the transition process to the non-damping section can be smoothly performed.

In contrast, the sealer 140 constructed with rubber has a high friction coefficient, so the frictional force with the housing 110 can be great and be firmly fixed without being affected by the moving pressure of the oil 112.

Additionally, since the ring 180 which is moved according to the compression and return motion has a high elastic modulus, the outer diameter may hardly change so that it can be brought into contact with the housing 110 in the damping section, while it is not brought into contact with the housing 110 in the non-damping section.

In contrast, the sealer 140 constructed with a rubber material has a low elastic modulus, so that once it is inserted and fixed into the housing 110, it can be fixed in a state where it has undergone a large amount of change in the outer diameter, thus enabling its robust fixation without being affected by the moving pressure of the oil 112.

Therefore, in the case of the ring 180 according to the present specification, unlike the sealer 140, a material having a low friction coefficient and a high elastic modulus is used, thereby enabling a smooth damping transition between the damping section and the non-damping section.

Meanwhile, if the ring 180 is constructed with a rubber material which has a low elastic modulus and thus is deformed readily, the ring 180 may be compressed and deformed readily by the oil pressure, so the change in the flow path area is delayed at the time of the transition from the damping section to the non-damping section, which may slow down the change to the non-damping section.

Contrarily, in the case of the ring 180 according to the present specification, it is constructed with a material which has a high elastic modulus and thus is not deformed readily, so the deformation of the ring 180 caused by the oil pressure is very small, and thus the transition from the damping section to the non-damping section can be made quickly.

Referring to FIG. 25, when the damper 100 is mounted in the damper assembly 20, it is preferable to set the distance between the sponge cover 151 and the washer 160 as an initial spacing distance W in order to provide a strong fastening force between the catch 220 and the slit 320 by utilizing the elastic force of the elastic member 111.

Because of this initial separation distance W, the damper 100, the damper cover 200, and the damper case 300 can provide an assembly structure having a stronger fastening force by utilizing the elastic force of the elastic member 111 without a separate fastening member such as a screw.

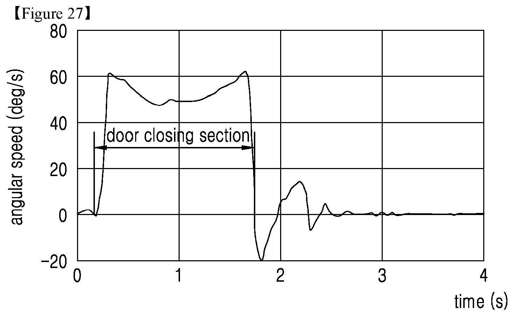

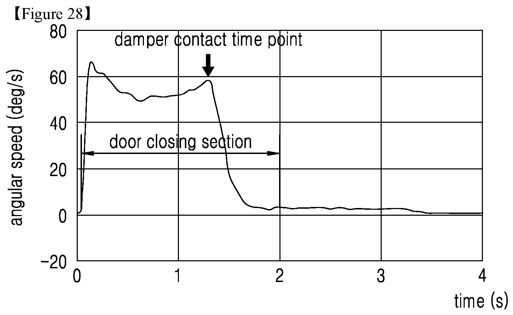

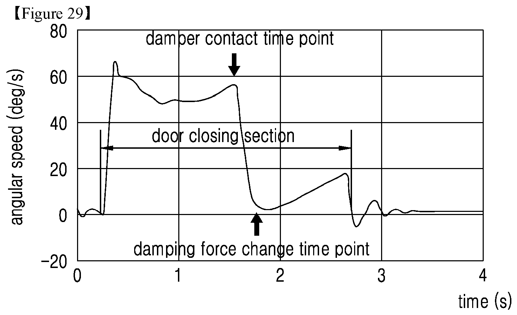

FIG. 27 is a graph showing the closing speed of a door on which no damper is mounted; FIG. 28 is a graph showing the closing speed of a door on which a damper having a constant damping force is mounted; and FIG. 29 is a graph showing the closing speed of a door on which a damper including a section where the damping force changes is mounted.

Referring to FIG. 27, it can be seen that, in the case where no damper is mounted, at the time when the door is closed after having passed through a door closing section, the door is collided against the cabinet, causing an impact, which in turn causes the door to bounce severely.

Meanwhile, referring to FIG. 28, in the case where a single-stage damper with a constant damping force is mounted, it can be seen that the closing speed of the door continuously decreases from a damper contact time point within the door closing section until the door is closed, and it can be ascertained that there is rarely a door bounce.

As described above, when the damping force is applied consistently, the door bounce can be greatly reduced, but if the resisting force by the pillar is added to the damping force of the damper within the door closing section, there may occur frequently a problem of the door not closing completely.

Meanwhile, referring to FIG. 29, in the case where a two-stage damper including a section where the damping force changes is mounted, it can be ascertained that the closing speed of the door decreases after the damper contact time point within the door closing section.

The reduction in the closing speed of the door is due to the damping force resulting from the damping operation in the damping section.

It can be ascertained that after the damping force change time point, the damper force decreases, and so the door closing speed increases.

The increase in door closing speed is due to the damping operation in the non-damped section.

When the pillar is unfolded in the section where the door closing speed increases again, the door closes completely and the door bounce occurs weakly.

As described above, when using a two-stage damper, the door may bounce slightly at the moment when the door is completely closed compared to a single-stage damper, but the difference is not significant, so it is possible to effectively solve the problem of the door not closing properly while causing no great inconvenience to the user.

Although the present invention has been described with reference to the illustrative drawings as the above, the present invention is not limited to the embodiments and drawings disclosed in this specification, and it is obvious that various modifications can be made by those skilled in the art without departing from the scope of the technical idea of the present invention. Additionally, even if the effects related to the configuration of the present invention were not explicitly described while explaining the embodiments of the present invention, it is obvious that the effects predictable from the configuration should also be acknowledged.

## Claims

1. A damper assembly comprising:
a damper;
a damper cover surrounding a front end of the damper and at least a portion of an outer circumferential surface of the damper; and
a damper case surrounding a rear end of the damper and at least a portion of the outer circumferential surface of the damper,
wherein the damper cover is configured to reciprocate in forward and backward directions along an inner circumferential surface of the damper case.

2. The damper assembly of claim 1, wherein a movement of the damper cover is dependent on a movement of the damper.

3. The damper assembly of claim 1, wherein the damper cover is inserted into the damper case and reciprocates therein.

4. The damper assembly of claim 1, wherein the damper cover includes a pair of rails extending in the forward and backward directions,
wherein the damper case includes guide portions on an inner surface of the damper case, which guide movement of the rails, and
wherein the rails are configured to reciprocate along the guide portions.

5. The damper assembly of claim 4, wherein the damper case includes a pair of slits on side surfaces of the damper case, each slit being open and extending along the rail so as to overlap with a portion of the rail, and
wherein the rail includes a catch that reciprocates along the slit.

6. The damper assembly of claim 5, wherein the damper is compressed or extended, and
wherein the catch engaging the slit as the damper cover moves to limit the damper's maximum extension.

7. The damper assembly of claim 1, wherein the damper cover includes a pair of first guide ribs protruding from an outer surface of the damper cover along the forward and backward directions.

8. The damper assembly of claim 1, wherein the damper case includes a plurality of second guide ribs on an inner surface of the damper case, which extend in the forward and backward directions and protrude,
wherein the damper cover includes a plurality of insertion as openings on an outer surface of the damper cover, and
wherein the insertion portion is configured to reciprocate along the second guide rib.

9. The damper assembly of claim 1, wherein the damper case includes one or more fastening parts protruding from an outer circumferential surface of the damper case.

10. The damper assembly of claim 1, wherein the damper includes:
a housing;
a piston positioned within the housing; and
a rod fixed to the piston at one end and extending to protrude from the rear end of the housing at the other end,
wherein the damper case supports the rod, and
wherein the damper cover supports a front end of the housing.

11. The damper assembly of claim 10, wherein a reinforcing plate is disposed between the damper case and the rod.

12. The damper assembly of claim 11, wherein the reinforcing plate includes a recessed groove for receiving and fixing the rod end.

13. The damper assembly of claim 1, wherein the damper includes a first inner diameter section, a second inner diameter section, and an inner diameter change section positioned between the first inner diameter section and the second inner diameter section, and
wherein an inner diameter of the housing in the second inner diameter section is greater than an inner diameter of the housing in the first inner diameter section.

14. The damper assembly of claim 13, wherein the damper includes:
a housing filled with oil;
a piston including an oil flow path and reciprocates along the inner diameter of the housing;
a bracket disposed to be spaced apart from the piston by a predetermined distance and reciprocating along the inner diameter of the housing; and
a ring disposed between the piston and the bracket.

15. The damper assembly according to claim 14, wherein the ring formed of a Teflon material.

16. The damper assembly according to claim 14, wherein the damper further includes one or more sealers sealing the housing to prevent the oil from leaking,
wherein a friction coefficient of the ring is lower than a friction coefficient of the sealer, and
wherein an elastic modulus of the ring is higher than an elastic modulus of the sealer.

17. The damper assembly according to claim 14, wherein the piston includes a first piston portion and a second piston portion protruding from the first piston portion toward the bracket and having an outer diameter smaller than an outer diameter of the first piston portion,
wherein an inner diameter of the ring is greater than the outer diameter of the second piston portion, and
wherein the ring surrounds a periphery of the second piston portion while being spaced apart from an outer circumferential surface of the second piston portion by a predetermined distance.

18. The damper assembly of claim 17, wherein, when the piston is compressed, the ring moves along the second piston portion toward the first piston portion until one side contacts the first piston portion; and
when the piston returns, the ring moves along the second piston portion toward the bracket until the other side contacts the bracket..

19. The damper assembly according to claim 14, wherein, when the piston is compressed and the ring passes through the first inner diameter section,
the oil filled in a front side of the piston flows toward a rear side of the piston through a first flow path formed with the oil flow path.

20. The damper assembly according to claim 14, wherein, when the piston is compressed and the ring passes through the second inner diameter section,
the oil filled in a front side of the piston flows toward a rear side of the piston through a second flow path formed between an outer diameter of the ring and the inner diameter of the housing and between an outer diameter of the first piston portion and the inner diameter of the housing.

21. The damper assembly according to claim 14, wherein, when the piston is returned and the ring passes through the second inner diameter section,
the oil filled in a rear side of the piston flows toward a front side of the piston through a second flow path formed between an outer diameter of the ring and the inner diameter of the housing and between an outer diameter of the first piston portion and the inner diameter of the housing and through a third flow path formed between an outer diameter of the second piston portion and an inner diameter of the ring.

22. The damper assembly according to claim 14, wherein, when the piston is returned and the ring passes through the first inner diameter section,
the oil filled in a rear side of the piston flows toward a front side of the piston through a third flow path formed between an outer diameter of the second piston portion and an inner diameter of the ring.

23. A refrigerator comprising:
a cabinet including a storage chamber;
a pair of doors, each rotating to open and close a front side of the cabinet; and
a pair of damper assemblies mounted on the pair of doors, respectively, to provide damping force,
wherein the damper assembly includes:
a damper;
a damper cover surrounding a front end of the damper and at least a portion of an outer circumferential surface of the damper; and
a damper case surrounding a rear end of the damper and at least a portion of the outer circumferential surface of the damper, and
wherein the damper cover is configured to reciprocate in forward and backward directions along an inner circumferential surface of the damper case.

24. The refrigerator of claim 23, wherein the pair of damper assemblies are mounted on rear surfaces of the pair of doors, respectively to be disposed diagonally toward the sides of the cabinet.

25. The refrigerator of claim 23, wherein the pair of doors includes a first door and a second door, and
a pillar rotatably mounted to fold toward or unfold from one side of the first door.

26. The refrigerator of claim 25, wherein the damper includes a first damping force section, a second damping force section, and a damping force change section disposed between the first damping force section and the second damping force section, and
wherein a first damping force provided by the damper in the first damping force section is greater than a second damping force provided by the damper in the second damping force section.

27. The refrigerator of claim 26, wherein, when the first door is closed from an open state thereof,
firstly, the first damping force is provided to the first door, and
secondarily, the second damping force and a third damping force generated by a rotation of the pillar are provided to the first door.
